# EUROPEAN PATENT SPECIFICATION

(11) **EP 0 492 343 B1**
(45) Date of publication and mention of the grant of the patent: **17.05.1995**
(21) Application number: 91121528.3
(22) Date of filing: 16.12.1991
(51) Int. Cl.: F16K 17/36, F17D 5/02, F16K 31/06

(54) **Low-energy control solenoid valve to shut off gaseous fluids**
Steuer-Ventilspule mit niedrigem Energieverbrauch zum unterbrechen eines Gasstromes
Vanne solénoide de commande à faible consommation d'énergie pour la coupure d'un fluide gazeux

(30) Priority: 20.12.1990 IT 8354790
(43) Date of publication of application: 01.07.1992
(73) Proprietor: ATEX SpA, I-33078 S.Vito al Tagliamento (PN) (IT)
(72) Inventor: Boscarol, Silvano, I-33098 Valvasone (PN) (IT); Savio, Paolo, I-33170 Pordenone (IT); Masili, Dino, I-33080 Prata di Pordenone (PN) (IT)
(74) Representative: Petraz, Gilberto Luigi

(56) References cited:
- DE-A- 2 606 656
- GB-A- 2 159 249
- US-A- 2 508 588
- US-A- 2 875 617
- PATENT ABSTRACTS OF JAPAN vol. 6, no. 228 (M-171)(1106) 13 November 1982 & JP-A-57 129 982

## Description

This invention concerns a low-energy control solenoid valve to shut off gaseous fluids, as set forth in the main claim.

In particular, the invention concerns a solenoid valve to shut off gaseous fluids, which are advantageously combustible and/or explosive gases, the solenoid valve being cocked by hand and being of a type which is intrinsically safe or which entails no danger to the environment in which it is installed.

The state of the art contains solenoid valves which also can be cocked by hand and which shut off combustible and/or explosive gaseous fluids.

These known solenoid valves require high values of current for their actuation so as to shut off the passage of the gaseous fluids.

These known systems entail also the typical problems arising from the use of high actuation currents.

A first problem concerns the great cross section required for the cables connecting the actuation device and the respective solenoid valve so as to ensure that the solenoid valve is tripped.

A second problem concerns generally all the high-energy controls, which may generate electrical sparks whenever connections are faulty, or the wiring is faulty and/or the insulation of the cables is inadequate.

The sparks become a very dangerous occurrence when the solenoid valve is used in dangerous environments such as those containing inflammable and/or explosive gases, liquids or materials.

Document JP-A-57129982 (Patent Abstracts of Japan, Vol.6, No.228, 13th.November 1982), cf. the preamble of claim 1, discloses the embodiment of a solenoid valve which is apparently of the same type as that of the present invention, but this document describes a solenoid valve with many serious deficiencies.

A first deficiency is the fact that in the event of breakage of the cocking spring the toothed cocking lever, being pivoted in its upper portion, besides the fact of its conformation allows the retaining lever to be reattached.

A second deficiency lies in the fact that between the cocking lever and the coil there is no further-reduction lever, thus requiring greater power from the coil.

Yet another deficiency is the fact that the coil meets the greatest resistance to its action when it begins that action, since the moment of mass inertia is greatest at the start of the action of the coil.

Moreover, in the event of leakage of gas along the shaft of the obturator, that gas will saturate the environment in which the coil and other electrical parts are located.

The present applicant has tackled this problem and surprisingly has designed, tested and embodied a solenoid valve able to overcome the problems of the state of the art and to provide further advantages.

The invention is set forth in the main claim, while the dependent claims describe various features of the invention.

The purpose of the invention is fulfilled by using a control system for the solenoid valve which requires low energy for its actuation.

Moreover, the invention enables the passage of the gases to be shut in the same direction as the gaseous flow and provides means to stop gas leaving along the periphery of the shaft. The invention provides also additional safety through its self-closure.

Furthermore, the invention ensures that sparks are not generated in any situation since the necessary power employed for actuation is of a value such that sparks are not generated.

The invention therefore provides so-called intrinsic safety, that is to say, safety where conditions of danger and/or of faulty working are not generated.

According to the invention a solenoid valve is provided which contains within it an axially movable shutter positioned, in relation to the flow of gas, upstream of a supporting surface. The shutter is connected at its lower end to a spring which tends to close the passage of the gas.

The shutter is connected at its upper end to a lever which cooperates with a movable lever comprising a projection and having a rotation pivot in its lower end, so that the movable lever with the projection is in itself always in unstable equilibrium.

The movable lever with the projection is kept in a clamping position by a spring.

The unclamped position is provided transiently by an armature actuated by a coil of very small dimensions, which is also able to perform reduction functions.

The armature makes it possible to have a practically nil resistance to the starting of the action of the coil and to be able to make use, at the time of its action on the movable lever with the projection, both of the electromagnetic force of the coil and of the inertia, namely of the energy accumulated by the armature.

According to the solution of the invention the coil requires for actuation of the unclamping system a very low value of current, namely a power of 0.17 to 0.4 joules with 34 to 57 milliamperes at 10 to 14 Volts.

This means that, as a very low power is required for tripping the device, electrical wires of a small cross section are enough and in any event there is no danger of sparks.

According to a variant the shutter is associated with a diaphragm, which performs the twofold task of preventing escapes of gas about the shaft from expanding in the environment and, at the same time, of acting as an auxiliary actuator if the spring below the shutter should lose its power or become worn.

The attached figures, which are given as a non-restrictive example, show as follows:-
- Fig.1: shows a vertical section of the solenoid valve according to the invention;
- Fig.2: gives a plan view of the solenoid valve of Fig.1;
- Fig.3: shows a detail.

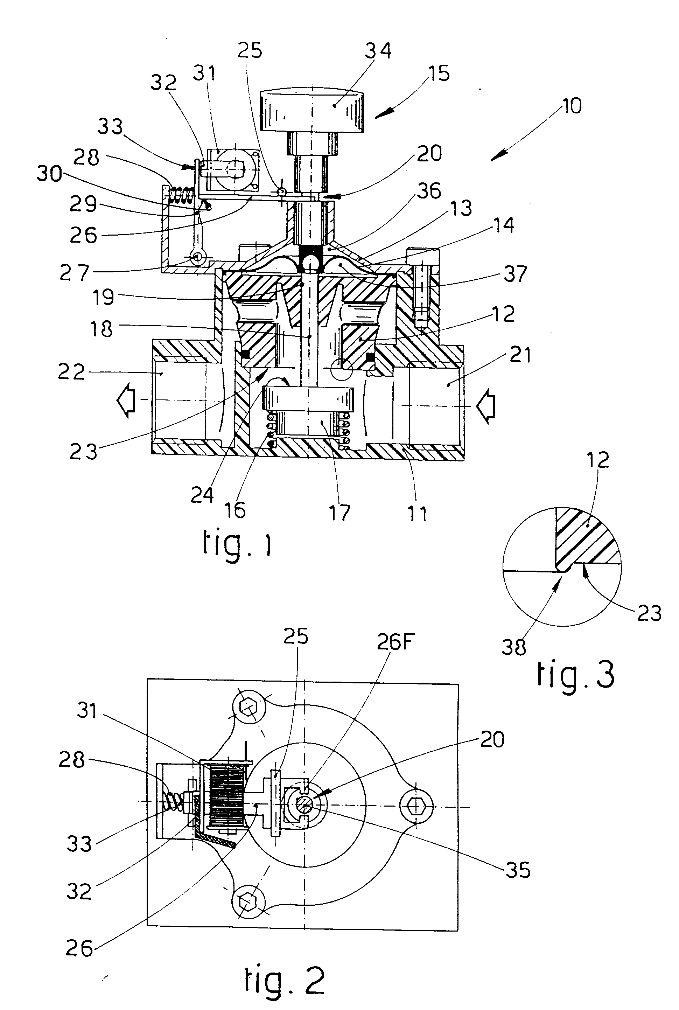

A solenoid valve 10 in this example comprises a body 11 containing a cage 12. The body 11 contains an inlet 21 and an outlet 22.

The cage 12 includes on its inlet side 21 a supporting surface 23.

According to a variant the supporting surface 23 comprises a closure ring 38.

A shutter 17 is included in cooperation with the supporting surface 23 and rests on the body 11, being resiliently thrust by a first spring 16.

The shutter 17 comprises a shaft 18 which slides in a hole 19 located in the cage 12. There is a guide coupling between the shaft 18 and the hole 19. This coupling enables a shutter surface 24 of the shutter 17 to adapt itself to the closure ring 38.

The coupling also enables the gaseous fluid passing through to reach an inner chamber 37 delimited and circumscribed by a diaphragm 14 and to remain entrapped therein.

The diaphragm 14 also exerts on the shaft 18 an action in the same direction as the first spring 16, the two actions thus being added together.

The body 11 comprises also a lid 13 which acts as a guide for a second central pivot 35.

Moreover, the lid 13 in cooperation with the body 11 enables the diaphragm 14 to be clamped.

The diaphragm 14 is firmly secured to the shaft 18 and prevents the gaseous fluid escaping to the exterior.

The diaphragm 14 is also connected to a cocking means 15, which includes a knob 34 and a toroidal recess 20.

A forked lever 26 pivoted on a first pivot 25 and having a desired ratio advantageously greater than 2:1 cooperates with the toroidal recess 20.

The fork 26F of the lever 26 is engaged in the toroidal recess 20 of the central pivot 35.

The forked lever 26 is a lever of the first order and rests at its other end on a projection 30 of a lever 29 with a projection. The lever 29 with the projection 30 is substantially normal to the forked lever 26.

The lever 29 with the projection 30 is pivoted at one end on a second pivot 27 and comprises its projection 30 at a central position and a lever extension 33 at its other end so as to reduce the stress.

The second pivot 27 is positioned below the projection 30, whereas the actuation means are positioned above.

The lever 29 with the projection 30 is thrust on one side by a resilient second spring 28, which thrusts the lever 29 against the forked lever 26.

The extension 33 of the lever 29 with the projection cooperates with an armature 32 of a coil 31; this armature 32 rests on the extension 33 only when the armature 32, owing to the action exerted by the coil 31, knocks thereagainst in overcoming the thrust of the second spring 28.

The armature 32 may possess a multiplication ratio.

A hollow portion to assist the passage of the forked lever 26 is included in the lever 29 below its projection 30.

The armature 32, being actuated momentarily by the coil 31, overcomes the resistance of the second spring 28 and displaces the lever 29 with the projection 30 backwards, thus removing the support provided by the projection 30 for the forked lever 26.

The forked lever 26 is thus free and no longer forms an axial constraint for the movement of the shutter 17 towards the closure ring 38.

If the first spring 16 does not function correctly, the difference of pressure existing between the inner chamber 37 and an outer chamber 36 thrusts the diaphragm 14 upwards and draws the shutter 17 upwards, the shutter 17 thus being rested against the closure ring 38 and causing the flow of gas to be shut off.

## Claims

1. A solenoid valve (10) to shut off gaseous fluids comprising a body (11,12), a shutter (17), a cocking means (15) to manually actuate the shutter in an open position, cocking spring means (16) to actuate the shutter (17) resiliently against a closure ring seat (38) within the body, the shutter comprising a shaft (18) connected intermediate its end portions with a first lever (26), one end portion of said lever cooperating with a projection (30) of a second lever (29) providing a temporary retaining action of the shutter in the open position, said second lever being pivoted at one end thereof and cooperating at the opposite end (33) with a solenoid comprising a coil (31) to displace said projection (30), whereby the shutter is actuated by the cocking spring means to the shut off position, characterized in that an armature member (32) is interposed between said opposite end (33) of the second lever and said solenoid, a first end portion of said armature member knocking against said opposite end (33) when the armature member (32) is actuated momentarily by the solenoid coil (31).

2. The solenoid valve according to claim 1, characterized in that the cocking spring means are arranged to urge the shutter (17) against the closure ring seat (18) in a direction opposite to the direction of displacement of the cocking means (15) to actuate the shutter in the open position, whereby the shutter performs closure upwards from below when the valve is in the upright position with the cocking means (15) above the body (11).

3. The solenoid valve according to claim 1 or 2, wherein the shaft (18) is substantially firmly secured at one end thereof to the shutter (17), and cooperates at its other end outside the body (11) with a diaphragm (14) which creates an airtight chamber (37).

4. The solenoid valve according to any of the preceding claims, wherein in use, the coil (31) is operated with a very low electric power.

## Patentansprüche

1. Elektromagnet (10), um gasförmige Fluide zu unterbrechen, mit einem Körper (11, 12), einem Verschluß (17), einer Absperreinrichtung (15), um den Verschluß manuell in eine Offen-Stellung zu betätigen, einer Spannfedereinrichtung (16), um den Verschluß (17) federnd gegen einen Dichtringsitz (38) im Körper zu betätigen, wobei der Verschluß folgendes aufweist: eine Stange (18), welche zwischen ihren Endabschnitten mit einem ersten Hebel (26) verbunden ist, einen Endabschnitt des Hebels, welcher mit einem Vorsprung (30) eines zweiten Hebels (29) zusammenwirkt, um eine zeitweilige Haltewirkung des Verschlusses in der Offen-Stellung zu schaffen, wobei der zweite Hebel an seinem einen Ende geschwenkt wird und an dem gegenüberliegenden Ende (33) mit einem Elektromagnet zusammenwirkt, welches eine Spule (31) aufweist, um den Vorsprung (30) zu verschieben, wodurch der Verschluß mittels der Spannfedereinrichtung zur Unterbrechungsstellung hin betätigt wird, dadurch gekennzeichnet, daß ein Armatur-Element (32) zwischen dem gegenüberliegenden Ende (33) des zweiten Hebels und dem Elektromagneten angeordnet ist, wobei ein erster Endabschnitt des Armatur-Elements gegen das gegenüberliegende Ende (33) anstößt, wenn das Armatur-Element (32) kurzzeitig mittels der Elektromagnetspule (31) betätigt wird.

2. Elektromagnet nach Anspruch 1, dadurch gekennzeichnet, daß die Absperrfedereinrichtung derart angeordnet ist, daß sie den Verschluß (17) gegen den Dichtringsitz (18) hin zur Verschieberichtung der Absperreinrichtung (15) gegenüberliegender Richtung anpresst, um den Verschluß in die Offen-Stellung zu betätigen, wodurch der Verschluß von unten nach oben eine Abdichtung bewirkt, sofern sich das Ventil in der Aufrechtstellung mit der Absperreinrichtung (15) oberhalb des Körpers (11) befindet.

3. Elektromagnet nach Anspruch 1 oder 2, wobei die Stange (18) mit ihrem einen Ende am Verschluß (17) im wesentlichen fest gesichert ist und mit ihrem anderen Ende außerhalb des Körpers (11) mit einem Diaphragma (14) zusammenwirkt, welches eine luftdichte Kammer (37) erzeugt.

4. Elektromagnet nach einem der vorstehenden Ansprüche, wobei die Spule (31) bei der Anwendung mit sehr geringer elektrischer Energie betrieben wird.

## Revendications

1. Vanne solénoide de commande pour la coupure de fluides gazeux comprenant un corps (11, 12), un obturateur (17), des moyens de réarmement (15) pour actionner manuellement l'obturateur dans une position d'ouverture, des moyens de réarmement à ressort (16) pour actionner l'obturateur (17) élastiquement contre un siège à bague de fermeture (38) à l'intérieur du corps, l'obturateur comprenant une tige (18) jointe dans une position intermédiaire entre ses extrémités à un premier levier (26), une extrémité du dit levier coopérant avec une dent (30) d'un deuxième levier (29) qui exerce une action de bloquage temporaire de l'obturateur dans la position d'ouverture, ledit deuxième levier étant monté pivotant à une extrémité et coopérant avec l'extrémité opposée avec un solénoide comprenant une bobine (31) pour déplacer la dite dent (30), raison pour laquelle l'obturateur est actionné par les moyens à ressort de réarmement dans la position de coupure, caractérisé par le fait qu'un élément à ancre (32) est interposé entre ladite extrémité opposée (33) du deuxième levier et ledit solenoide, une première partie terminale du dit élément à ancre battant contre ladite extrémité opposée (33) quand l'élément à ancre (32) est momentanément actionné par la bobine à solénoide (31).

2. Vanne solénoide de commande selon la revendication 1, caractérisée par le fait que les moyens à ressort de réarmement sont agencés pour pousser l'obturateur (17) contre le siège à bague de fermeture (18) dans une direction opposée à la direction de déplacement des moyens de réarmement (15) pour actionner l'obturateur dans la position d'ouverture, raison pour laquelle l'obturateur effectue la fermeture du bas vers le haut quand la vanne se trouve dans la position droite avec les moyens de réarmement (15) au dessus du corps (11).

3. Vanne solénoide de commande selon la revendication 1 ou 2, caractérisée par le fait que la tige (18) est fondamentalement solidaire, à une de ses extrémités, avec l'obturateur et coopère, à son autre extrémité externement au corps (11), avec une membrane (14) qui crèe une chambre étanche à l'air (37).

4. Vanne solénoide de commande selon une ou l'autre des revendications précédentes dans laquelle, durant l'utilisation, la bobine (31) est actionnée avec une puissance électrique très faible.
